# EUROPÄISCHE PATENTSCHRIFT

(11) **EP 3 983 702 B1**
(45) Veröffentlichungstag und Bekanntmachung des Hinweises auf die Patenterteilung: **02.08.2023**
(21) Anmeldenummer: 20732563.0
(22) Anmeldetag: 10.06.2020
(51) Int. Cl.: F16H 25/24

(54) **LINEARANTRIEB MIT LAGEAUSRICHTUNGSMITTELN ZWISCHEN FÜHRUNGSROHR UND SPINDELMUTTER**
LINEAR DRIVE WITH POSITIONAL ORIENTATION MEANS BETWEEN GUIDE TUBE AND SPINDLE NUT
ENTRAÎNEMENT LINÉAIRE COMPRENANT DES MOYENS D'ORIENTATION DE POSITION ENTRE LE TUBE DE GUIDAGE ET L'ÉCROU DE BROCHE

(30) Priorität: 17.06.2019 DE 202019103390 U; 17.12.2019 DE 102019134755
(43) Veröffentlichungstag der Anmeldung: 20.04.2022
(73) Patentinhaber: DewertOkin KFT, 6000 Kecskemét (HU)
(72) Erfinder: PORDE, Christoph, 6000 Kecskemé (HU); VARGA, Zoltán, 6100 Kiskunfélegyháza (HU)
(74) Vertreter: Lippert Stachow Patentanwälte Rechtsanwälte
(86) Internationale Anmeldenummer: PCT/EP2020/066123
(87) Internationale Veröffentlichungsnummer: WO 2020/254172

(56) Entgegenhaltungen:
- WO-A1-2013/068329
- DE-U1-202016 106 361
- US-A1- 2017 184 187
- US-A1- 2018 355 958

## Beschreibung

Die Erfindung betrifft einen Linearantrieb mit einem Getriebegehäuse mit den Merkmalen des Oberbegriffs des Anspruchs 1.

Ein derartiger Linearantrieb wird vorzugsweise für das automatische Verstellen von beweglich gelagerten Teilen von Liege- und Sitzmöbeln, also Möbelstücken, verwendet.

Aus der WO 2013/068329 der Anmelderin ist ein gattungsgemä-βer Linearantrieb bekannt.

Beim Stand der Technik treibt ein Elektromotor ein Schneckenrad an, welches ein Innengewinde aufweist, in das eine Gewindespindel eingeschraubt ist. Auf der Gewindespindel läuft eine Spindelmutter, die über Führungsmittel in dem Führungsrohr verdrehgesichert und im Verhältnis zu dem stationären Führungsrohr relativ verstellbar ist, zwischen einer ausgefahrenen Ausfahrstellung und einer in das Führungsohr eingefahrenen Einfahrstellung. Die Ausfahr- und Einfahrstellung sind normalerweise über Endschalter bestimmbar bzw. verstellbar.

Zur Verdrehsicherung der Spindelmutter weist das äußere, hohlzylindrische Führungsrohr an der inneren Mantelfläche sich in Längsrichtung erstreckende und radial nach innen ragende Führungsrippen bzw. Vorsprünge oder dergleichen auf, welche außenseitig in korrespondierend an der äußeren Mantelfläche der Spindelmutter ausgebildete Führungsnuten eingreifen und somit die korrekte Winkel- bzw. Drehwinkelausrichtung der Spindelmutter um die Längsachse im Verhältnis zum dem Führungsrohr gewährleisten. Vorzugsweise weist die Spindelmutter mehrere radial nach außen ragende umfänglich zueinander beabstandete Führungsnuten auf, in welche korrespondierende, umfänglich zueinander beabstandete, radial nach innen ragende Innenstege bzw. Innenrippen an dem Führungsrohr in Einbaulage eingreifen. Die nach innen ragenden Innenstege werden mitunter auch als Flansche bezeichnet, weshalb diese verdrehgesicherte Anordnung bzw. Linearführung der Spindelmutter im stationären Führungsrohr auch als "Flanschführung" bezeichnet wird.

Eine weitere Linearführung ist in US 2017/184187 A1 beschrieben. Um eine Spindelmutter verdrehsicher in einem Führungsrohr lagern zu können, besitzt das Führungsrohr eine unrunde Innenkontur und die darin geführte Spindelmutter eine entsprechend angepasste Außenkontur. Ein automatisiertes Einsetzen der Spindelmutter in einer in Bezug auf den Querschnitt des Führungsrohrs richtigen Winkellage ist nicht möglich. Außerdem ist das besonders profilierte Führungsrohr aufwändiger zu fertigen als ein zylindrisches Führungsrohr.

### Nachteile am Stand der Technik

Die unkorrekte Winkelausrichtung bzw. Drehwinkelausrichtung der Spindelmutter um die Längsachse zu dem Führungsrohr kann das Einsetzen der Spindelmutter in das Führungsrohr verzögern, weil z.B. bei unkorrekter Ausrichtung des Drehwinkels der Spindelmutter um die Mittellängsachse der Spindel bzw. der Spindelmutter ein Zwischensteg oder ein anderes Bauteilteil der Spindelmutter gegen einen Innensteg des Führungsrohrs anschlagen kann, so dass die Spindelmutter um die Längsachse herum gedreht werden muss, um die korrekte Anordnung der Spindelmutter in dem Führungsrohr zu realisieren und diese dann nochmals in das Führungsrohr einzuführen.

Die Begriffe "Drehwinkel" oder "Winkelausrichtung" beziehen sich im Sinne dieser Erfindung also auf die Drehung um die Längsachse der Spindel und/oder der Spindelmutter.

### Technisches Problem / Aufgabe

Ausgehend von dem eingangs genannten Stand der Technik und den damit verbundenen Nachteilen liegt der Erfindung somit die Aufgabe zugrunde, die geschilderten Nachteile zumindest teilweise zu vermeiden und insbesondere ein Lineargetriebe vorzusehen, welches eine schnellere und leichtere Montage der Spindelmutter innerhalb des Führungsrohrs ermöglicht und somit die Durchlaufzeiten der Montage des Linearantriebs reduziert.

### Erfindung

Dieses wird erfindungsgemäß bei einem Lineargetriebe der eingangs genannten Art bereits durch die Merkmale der unabhängigen Ansprüche gelöst. Bevorzugte, aber nicht zwingende Merkmale sind in den Unteransprüchen wiedergegeben.

In der einfachsten Ausführungsform wird das technische Problem bzw. die Aufgabe dadurch gelöst, dass zwischen den Fügepartnern Lageausrichtungsmittel ausgebildet sind, welche eine korrekte Drehwinkelausrichtung der Spindelmutter im Verhältnis zu dem Führungsrohr bewirken.

Diese Lageausrichtungsmittel sind so ausgebildet, um beim Zusammenfügen der Fügepartner an der Fügestelle bzw. Fügeebene eine Drehung des beweglichen Fügepartners um die Längsachse zu bewirken, um also selbständig die korrekte Ausrichtung innerhalb des jeweilig anderen Fügepartners zu realisieren.

Bevorzugt stellt das Führungsrohr den stationären, nicht beweglichen Fügepartner dar und die Spindelmutter den bewegten bzw. um die Längsachse drehbaren Fügepartner.

Die Lageausrichtungsmittel umfassen mindestens zwei zueinander beabstandete und zu mindestens am Vorderende im Wesentlichen als Schiffchen-Profile ausgebildete Einfädelprofile. Diese als Schiffchen-Profile ausgebildeten Einfädelprofile weisen jeweils eine radial von einer Oberfläche abragende Vorderkante bzw. Einfädelkante auf, von der sich nach hinten seitliche Einfädelflächen, ähnlich wie der Bug eines Schiffes erstrecken. Mindestens zwei aneinander angrenzende Einfädelprofile bilden zwischen einander eine Führungsnut bzw. gehen in eine Führungsnut über.

Die Begriffe Vorderende und Hinterende bzw. vorne und hinten beziehen sich auf die Fügerichtung bzw. Einsteckrichtung der Fügepartner.

Die Einfädelprofile weisen somit im Wesentlichen die Geometrie ähnlich wie der Bug eines Schiffes auf (Schiffchen-Profile), wobei sich die radial von einer Oberfläche nach außen erstreckende Vorderkante die jeweils seitlich an diese Vorderkante anschließenden Einfädelflächen nach hinten, also entgegen der Einsteckrichtung bis zu den jeweiligen Führungsnuten erstrecken. Ein Schiffchen-Profil weist also zwei von der Vorderkante nach hinten zu an der Umfangsfläche aneinander angrenzende Führungsnuten ersteckende Flächen auf, die vorzugsweise geometrisch gleich, besonders bevorzugt rechteckig gestaltet sind.

Beim Zusammenbringen der Fügepartner gleiten die Innenstege oder Führungsstege beim Kontakt an den Einfädelflächen ab und drehen wegen der schrägen Ausbildung der Einfädelflächen im Verhältnis zu den radial nach innen ragenden und gegen diese stoßenden Innenstege so lange den beweglichen Fügepartner bis der Innensteg bzw. die Innenstege in die zwischen zwei angrenzende Schiffchen-Profile ausgebildete Führungsnut gleiten und somit korrekt im Verhältnis zueinander ausgerichtet und axial geführt sind.

Zwar kann die gewünschte Ausrichtung der Spindelmutter bereits dadurch realisiert werden, dass lediglich zwei nebeneinander angeordnete Einfädelprofile mit jeweils zwischen zwei aneinander angrenzenden Einfädelprofilen ausgebildeten Führungsnuten vorgesehen sind, vorteilhaft ist für eine schnellere Ausrichtung jedoch, dass mehrere solcher Einfädelprofile nebeneinander an einem Fügepartner vorgesehen sind.

Vorzugsweise sind die Einfädelprofile umfänglich auf einer äußeren Mantelfläche der Spindelmutter ausgebildet, vorzugsweise erheben sich diese schiffchen-förmig von dieser äußeren Mantelfläche radial nach außen, wobei einzelne Schiffchen-Profile symmetrisch angeordnet angrenzend aneinander umfänglich auf der Mantelfläche ausgebildet sind mit jeweils zwischen zwei angrenzenden Schiffchen-Profilen gebildeten Führungsnuten.

Bevorzugt ist angrenzend an den vorderen Schiffchen-Profilabschnitten ein linearer Bereich ausgebildet, welcher die Führungsnut zwischen zwei aneinander angrenzenden Schiffchen-Profilen bildet. Unter linear wird hier ein gerader Bereich zur Bildung der Führungsnut zwischen zwei angrenzend aneinander angeordneten Schiffchen-Profilen gemeint, der also die Führungsnut darstellt. Mehrere nebeneinander angeordnete Schiffchen-Profile stellen damit eine Schiffchen-Anordnung dar.

In der Draufsicht weisen die Schiffchen-Profile somit zumindest an einem vorderen Einfädelbereich im Wesentlichen die Geometrie eines gleichschenkeligen Dreiecks auf, wobei sich die Einfädelflächen von der Vorderkante gleichschenklig zu den beidseitig von dem jeweiligen Schiffchen-Profil ausgebildeten Führungsnuten erstrecken.

Bevorzugt sind die Einfädelflächen im Wesentlichen gerade ausgebildet, können jedoch auch gekrümmt bzw. gewölbt sein, z.B. konvex oder konkav.

Zum Vereinfachen des Einfädelns, also zur Ausrichtung der Fügepartner im Verhältnis zueinander, hat es sich als zweckmäßig erwiesen, dass die Einfädelprofile entgegen der Einschubrichtung nach oben erstreckend nach hinten geneigt sind, so dass also die Vorderkante eine nach hinten geneigte Kante darstellt, welche das Einfädeln bzw. Einführen des eingeschobenen Fügepartners in den aufnehmenden Fügepartner begünstigt.

Besonders bevorzugt sind die Einfädelprofile bzw. Schiffchen-Profile umfänglich auf einer zylindrischen Mantelfläche der Spindelmutter ausgebildet. Dabei kann es durchaus vorgesehen sein, dass die Spindelmutter länger ist als die Einfädelprofile, die Einfädelprofile also an einen vorzugsweise hinteren Einfädelabschnitt ausgebildet sind, die dann endseitlich in die Führungsnuten übergehen. Vor diesem Einfädelabschnitt kann ein zusätzlicher zentraler Gewindeabschnitt bzw. Gewindestutzen zur Aufnahme der Spindel ausgebildet sein.

Es liegt im Rahmen der Erfindung, dass die Einfädelprofile an der Innenwand des Getriebegehäuses angrenzend an das in das Getriebegehäuse ragende Stirnende des Führungsrohrs ausgebildet sind, so dass also ein von einem Automaten, Roboter oder dergleichen in das Führungsrohr eingeschobene Spindelmutter durch die an dem Gehäuse innenseitig vorgesehenen Einfädelprofile korrekt ausgerichtet wird, also die radial nach innen ragenden Innenstege an der Innenseite des Führungsrohrs in die Führungsnuten der Spindelmutter eingreifen.

Vorzugsweise sind die Einfädelprofile einstückig an dem jeweiligen Fügepartner ausgebildet, vorzugsweise einstückig an diesem angeformt, insbesondere an die der äußeren Mantelfläche der Spindelmutter bzw. an dem Getriebegehäuse bzw. auch an der Innenseite des Führungsrohrs, sofern die Führungsstege an der Spindelmutter ausgebildet sind.

Es liegt jedoch grundsätzlich auch im Rahmen der Erfindung, dass die Einfädelprofile mit dem jeweiligen Fügepartner verbindbar ausgebildet sind, z.B. an diesen aufsteckbar bzw. einsteckbar ausgestaltet sind. Dieses kann z.B. bei der Ausbildung der Einfädelprofile an der Spindelmutter dadurch erfolgen, dass die Einfädelprofile an einem Ansteck- oder Aufsteckring ausgebildet sind, der mit der Spindelmutter verbindbar ist, z.B. aufschnappbar oder einrastbar mit der Spindelmutter verbindbar ist. Auch die nachträgliche Anordnung der Einfädelprofile an dem Getriebegehäuse ist möglich, z.B. können die Einfädelprofile innenseitig auf das Getriebegehäuse aufgesteckt werden.

Die verbindbare Ausgestaltung kann z.B. einen Aufsatzring umfassen, der auf das in das Getriebegehäuse ragende, hintere Stirnende des Führungsrohrs aufsetzbar ist. Der Aufsatzring liegt somit in Einbaulage mit einer Ringfläche an der äußeren Stirnfläche des Führungsrohrs an. Von der durch diesen Aufsatzring definierten Aufsatzebene erstreckt sich mindestens ein in das Führungsrohr einsteckbarer Einstecksteg, der in Einbaulage zwischen zwei angrenzende, radial nach innen ragende Innenstege innerhalb des Führungsrohrs eingreift. In entgegengesetzter Richtung zu diesem mindestens einen Einstecksteg erstreckt sich ebenfalls quer zur Aufsatzebene des Aufsatzrings mindestens ein Schiffchen-Profil, das beim Einschieben der Spindelmutter in komplementäre Führungsstrukturen an dessen Außenseite eingreift. Vorzugsweise sind mehrere Schiffchen-Profile vorgesehen.

Diese Führungsstruktur an der Außenseite der Spindelmutter umfasst bevorzugt breitere Außenstege bzw. Außenrippen, zwischen denen das Schiffchen-Profil beim Fügen eingreift und die eingesetzt in das Führungsrohr zwischen zwei angrenzende, nach innen ragende Innenstege an der Innenseite des Führungsrohrs eingreifen.

Die erfindungsgemäße Ausgestaltung ist insbesondere für die automatisierte bzw. teilautomatisierte Montage besonders vorteilhaft, wenn also die Spindelmutter mittels eines Roboters oder eines Automaten in das Führungsrohr eingesetzt wird. Durch die erfindungsgemäß realisierte selbstjustierende Ausbildung muss der Roboter bzw. Automat nicht aufwendig eingeschult werden. Vielmehr wird die korrekte Drehwinkelausrichtung der Fügepartner beim Fügen der Fügepartner ineinander automatisch durch die erfindungsgemäße Gestaltung der Fügepartner realisiert. Eine weitere Möglichkeit der Erfindung besteht sogar darin, die Einfädelprofile an dem Roboter bzw. Automaten vorzusehen.

Bevorzugt ist das Getriebegehäuse teilbar und umfasst neben dem ersten Gehäuseteil ein zweites, mit diesem ersten Gehäuseteil verbindbares zweites Gehäuseteil, welches z.B. als abnehmbarer Gehäusedeckel ausgebildet ist.

Bei der bevorzugten Ausführungsform ist das Motorgehäuse in das Getriebegehäuse einsteckbar ausgebildet.

Ausführungsformen umfassen, dass zwischen den Gehäuseteilen ein Flanschbereich mit einer dichtenden Nut-/Feder-Verbindung ausgebildet ist. Der vorgeschlagene Linearantrieb wird bevorzugt als Möbelantrieb eingesetzt, besonders bevorzugt zum Verstellen eines schwenkbaren Kopf- oder Fußteils eines Krankenbettes. Für den Fachmann ist verständlich, dass dieser allgemein zum Verstellen von mechanischen Einrichtungen aller Art einsetzbar ist, insbesondere zum Verstellen eines beweglichen Bauteils im Verhältnis zu einem stationären Bauteil.

Im Rahmen der Montage wird zunächst das das Schneckenrad auf das hintere Ende der Spindel aufgesteckt und ein Kugellager auf einen hinteren Lagersitz des Schneckenrads aufgesetzt. Sodann wird die Spindelmutter mit dem Hubrohr mit dem vorderen Gabelkopf verbunden und in das Führungsrohr eingeführt. Schließlich werden die beiden Baugruppen miteinander verbunden, in das Getriebegehäuse eingesetzt und dieses verschlossen.

Erfindungsgemäß ist somit nur ein Lager zur Lagerung der der Spindel mit dem Schneckenrad in dem Getriebegehäuse notwendig, nämlich das auf dem hinteren Lagersitz des Schneckenrads angeordnete Lager, welches bevorzugt als Festlager und als Rollenlager ausgebildet ist.

Die Befestigung des Lagers auf dem Lagersitz des Schneckenrads erfolgt bevorzugt über eine stoffschlüssig mit dem hinteren Stirnende der Spindel verschweißte Mitnehmerscheibe. Mindestens eine Verbindung aus Vorsprung und Ausnehmung an dem Schneckenrad und der Mitnehmerscheibe realisiert zudem drehfeste Verbindung zwischen der Mitnehmerscheibe und dem Schneckenrad. Bevorzugt sind mehrere Ausnehmungen vorgesehen, in die korrespondierende Vorsprünge eingreifen, insbesondere zwei diametral gegenüberliegende Paare aus Ausnehmung und Vorsprung. Die Sicherungsscheibe sichert somit das hintere Lager axial auf dem Lagersitz und stellt zudem die drehfeste Verbindung zwischen der Stahlspindel und dem vorzugsweise aus Kunststoff gefertigten Schneckenrad dar.

Beim Stand der Technik weisen diese Flanschführung bzw. Profilierung allseits ein Spiel zueinander auf. Je nach Betriebspunkt und Betriebssituation des Linearantriebs treten bedingt durch dieses Spiel insbesondere bei der Richtungsumkehr der Spindel unschöne Geräusche auf. Eine Reduzierung des Spiels ist fertigungstechnisch relativ aufwendig, weil dann besondere Toleranzen berücksichtigt werden müssen und deshalb zu kostspielig sind.

Eine bevorzugte Weiterentwicklung sieht zur Vermeidung dieser Geräusche vor, dass die Flanschführung, also die Nut-/Feder-Verbindung zur verdrehgesicherten Axialführung der Spindelmutter im Verhältnis zum stationären Führungsrohr zumindest abschnittsweise federnd ausgebildet ist. Bevorzugt erfolgt dieses, indem die vorzugsweise aus Kunststoff geformte Spindelmutter mindestens einen Federabschnitt umfasst oder die Spindelmutter weist an ihrer äußeren, umfangseitigen Mantelfläche einen profilierten Abschnitt auf, in welchen die am Führungsrohr korrespondierend ausgebildeten Innenrippen eingreifen. Durch die Verwendung der federnd nachgiebigen Abschnitte wird stets eine ausreichende Vorspannung mindestens einer, vorzugsweise mehrerer zwischen dem umgebenden Führungsrohr und der Spindelmutter ausgebildeten Flanschführungen vor.

Es versteht sich für den Fachmann, dass diese federvorgespannte Linearführung zur Geräuschvermeidung nicht zwangsläufig mit dem Schiffchen-Profil zur automatisch korrekten Ausrichtung der Spindelmutter zum Führungsrohr kombiniert sein muss, sondern vielmehr auch unabhängig von dem Schiffchen-Profil realisiert sein kann. Insofern wird für die federvorgespannte Linearführung auch selbstständig Schutz beansprucht. Die Kombination der federvorgespannten Linearführung mit den Schiffchen-Profilen an einem Lineargetriebe stellt allerdings die besonders bevorzugte Ausführungsform dar.

Weitere Merkmale und Vorteile der vorliegenden Erfindung werden deutlich anhand der nachfolgenden Figurenbeschreibung bevorzugter Ausführungsbeispiele unter Bezugnahme auf die beiliegenden Abbildungen. In dieser Hinsicht wird Richtungsterminologie wie etwa "oben", "unten", "vorne", "hinten", "vorderes", "hinteres", usw. in Bezug auf die Orientierung der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne aufzufassen. Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist. Die Darstellungen in den Figuren sind im Wesentlichen maßstäblich. Zur Veranschaulichung von Details können jedoch bestimmte Bereiche für den Fachmann erkennbar übertrieben groß dargestellt sein. Darüber hinaus können die Zeichnungen plakativ vereinfacht sein und enthalten nicht jedes bei der praktischen Ausführung gegebenenfalls vorhandene Detail.

Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen.

Die folgende ausführliche Beschreibung ist nicht im einschränkenden Sinne aufzufassen. Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration.

Sofern nicht anders angegeben, beziehen sich der unbestimmte Artikel und der bestimmte Artikel nicht nur auf ein einzelnes Bauteil, sondern sind zu verstehen als "mindestens eins". Die Terminologie umfasst die zuvor genannten Worte, Abwandlungen davon sowie ähnliche Bedeutungen. Ferner sollte verstanden werden, dass die Begriffe "etwa", "im Wesentlichen, "und ähnliche Begriffe in Verbindung mit den Dimensionen und einer Eigenschaft einer Komponente der Erfindung die beschriebene Dimension und Eigenschaft nicht als strikte Grenze oder Parameter beschreiben und geringfügige Abwandlungen davon nicht ausschließen, welche funktional ähnlich sind. Zumindest umfassen Beschreibungsteile mit numerischen Parametern auch Abwandlungen dieser Parameter gemäß den mathematischen und fertigungstechnischen Prinzipien im Stand der Technik, z.B. Rundungen, Abweichungen und andere systematische Fehler, Fertigungstoleranzen etc.

Schließlich sind bei mehreren gleichen Bauteilen bzw. Elementen aus Gründen der Übersichtlichkeit nur jeweils eins mit einem Bezugszeichen versehen.

Es zeigen:
- Figur 1: eine perspektivische Frontansicht eines erfindungsgemäßen Lineargetriebes bzw. Linearantriebs;
- Figur 2: einen Längsschnitt des Linearantriebs;
- Figur 3: eine vergrößerte isometrische Detailansicht der stirnseitig in das Führungsrohr eingesetzten Spindelmutter im Gehäuse;
- Figur 4: eine vergrößerte isometrische Frontansicht einer ersten Ausführungsform der Spindelmutter;
- Figur 5: eine alternative Ausführungsform des Linearantriebs mit einem auf das hintere Stirnende des Führungsrohrs aufgesetzten Aufsatzring mit einem Schiffchen-Profil;
- Figur 6: eine isometrische Frontansicht des Führungsrohrs mit abgenommenem Aufsatzring;
- Figur 7: eine alternative Ausführungsform des Linearantriebs mit den Schiffchen-Profilen ausgebildet an der Innenseite des Getriebegehäuses;
- Figur 8: eine vergrößerte isometrische Frontansicht der von der Spindel gelösten Spindelmutter zur Verdeutlichung der gefederten Flanschführung;
- Figur 9: eine vergrößerte isometrische Frontansicht einer Flanschführung zur Verdeutlichung des auftretenden Spiels;
- Figur 10: eine vergrößerte isometrische Rückansicht eines Teilabschnitts zur Verdeutlichung der federnden Ausgestaltung der Spindelmutter und
- Figur 11: eine isometrische Rückansicht einer federnd ausgebildeten Spindelmutter.

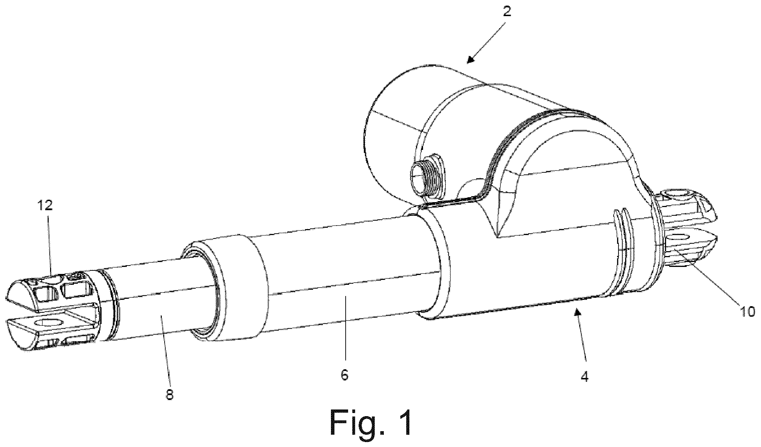

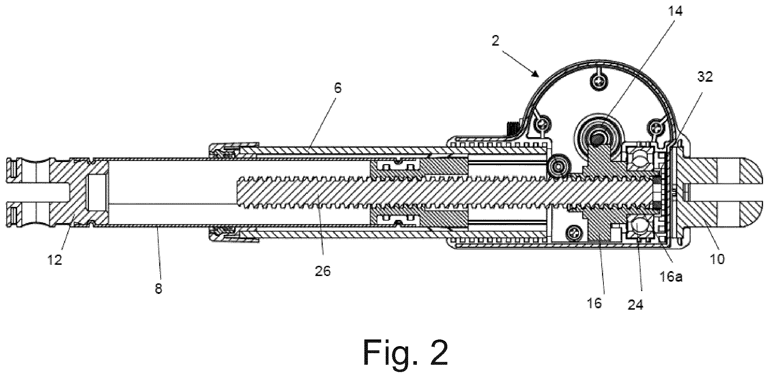

Demnach besteht der in seiner Gesamtheit in den Figuren 1 und 2 dargestellte Linearantrieb im Wesentlichen aus einem Motor, aufgenommen in einem Motorgehäuse 2, welches sich quer erstreckt zu einem Getriebegehäuse 4, in dem an einem vorderen Ende ein Führungsrohr 6 aufgenommen ist, in dem wiederum relativ beweglich ein Hubrohr 8 aufgenommen ist. In das hintere Ende des Getriebegehäuses 4 ist ein hinterer Gabelkopf 10 eingesetzt und an dem vorderen Ende des Hubrohrs 8 ist ein vorderer Gabelkopf 12 befestigt. Über diesen Gabelkopf 10, 12 wird der Linearantrieb beispielsweise zwischen dem unterseitigen Rahmen eines Bettes und einem zu verstellenden, schwenkbaren Rahmenteil, z.B. einem Kopf- oder Fußteil eingespannt bzw. mit Streben befestigt, die somit gegeneinander verstellt werden können, indem das Hubrohr 8 aus dem Führungsrohr 6 ausgefahren und wieder in dieses eingefahren wird.

Die Figur 2 zeigt den Linearantrieb bei teilweise ausgefahrenem Hubrohr 8 im Schnitt. Das Verstellen des Hubrohrs 8 erfolgt über den in dem Motorgehäuse 2 aufgenommen Elektromotor, welcher eine Welle mit einer darauf endseitig angeordneten Schnecke 14 antreibt, die ihrerseits in bekannter Weise ein Schneckenrad 16 kämmt. Entweder direkt eingesetzt in dieses Schneckenrad 16 oder über eine Spindelmutter mit dem Schneckenrad 16 verbunden ist eine Spindel 26, auf der eine Spindelmutter 20 läuft.

Gemäß Figur 2 weist das Schneckenrad 16 an der vom Hubrohr 6 abgewandten Seite einen Lagersitz 16a auf, auf dem der Innenring eines Lagers 24 sitzt, dessen Außenring in dem umgebenden Getriebegehäuse 2 aufgenommen ist. Dieses als Festlager ausgebildete Lager 24 kann somit das einzige Lager zur Lagerung der Spindel 26 mit dem Schneckenrad 16 in dem Getriebegehäuse darstellen.

Die Befestigung des Lagers 24 erfolgt über eine stoffschlüssig mit dem hinteren Stirnende der Spindel verschweißte Mitnehmerscheibe 32, deren Außendurchmesser größer ist als der Außendurchmesser der Spindel 26 und des Lagersitzes 16a. Die Mitnehmerscheibe 32 weist in der äußeren Umfangsfläche diametral gegenüberliegend zwei Ausnehmungen auf, in welche zwei stiftartige Verlängerungen am hinteren Ende des Lagersitzes 16a eingreifen und somit die drehfeste Verbindung zwischen Spindel 26 und Schneckenrad 16 realisieren..

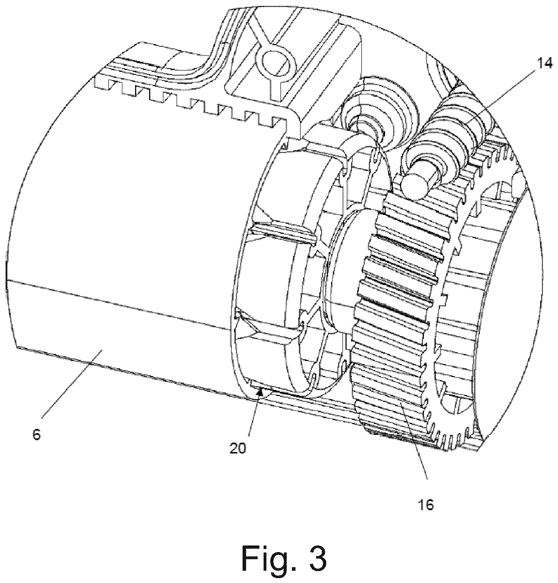

Die Betätigung der Schnecke 14 über den Elektromotor bewirkt somit eine Drehung des Schneckenrads 16 und der darin drehfest aufgenommenen Spindel 26, wodurch sich die mit einem komplementären Innengewinde ausgebildete Spindelmutter 20 auf der Spindel 18 innerhalb des stationären Führungsrohrs 6 von einem in der Figur 3 vergrößert dargestellten, hinteren Einfahrende bis zu einem in der Figur 1 dargestellten vorderen Ausfahrende verstellt.

Das Getriebe an sich ist nur am Rande Gegenstand dieser Erfindung. Erfindungswesentlich ist die Ausgestaltung der Spindelmutter 20.

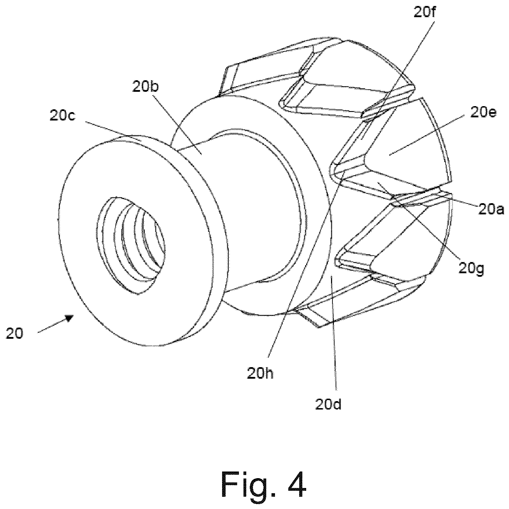

Anhand der Figur 4 wird der Montageprozess des Einsetzens einer Spindelmutter 20 in das Führungsrohr 6 verdeutlicht, wie dieses durch einen Monteur oder auch einen Roboter erfolgen kann.

Für die korrekte Flanschführung, also die Anordnung der Spindelmutter 20 in dem Führungsrohr, muss die Spindelmutter 20 in einem bestimmten Drehwinkel um die Längsachse der Spindel 26 bzw. der Spindelmutter 20 ausgerichtet sein, damit die am hinteren Ende der Spindelmutter 20 ausgebildeten Führungsnuten 20a in Einbaulage korrekt mit den innenseitig an dem Führungsrohr ausgebildeten, radial nach innen ragenden Innenstegen fluchten. Der Einfachheit halber ist jeweils nur je eine Führungsnut 20a mit Bezugszeichen versehen, obwohl diese mehrfach umfänglich vorgesehen ist.

Die Spindelmutter 20 weist einen zylindrischen Grundkörper 20b auf, der an einem vorderen Einsteckende mit einem radial verbreiterten, kreiszylindrischen Einsteckbund 20c versehen ist. Innenseitig an dem zylindrischen Grundkörper 20b ist ein komplementär zu der auf der jeweiligen Spindel 18 bzw. dem Außengewinde der Spindel 26 ausgebildetes Innengewinde vorgesehen. Am hinteren Ende geht die Spindelmutter 20 von diesem mittigen zylindrischen Grundkörper 20b radial verbreiternd in einen hinteren Einsteckabschnitt 20d über, welcher eine äußere zylindrische Mantelfläche aufweist, die im Außenumfang etwa dem des Einsteckbundes 20c entspricht. Außenseitig auf diesem Einsteckabschnitt 20d sind in gleichmäßigen Abständen umfänglich beabstandet die als Schiffchen-Profile 20e ausgebildeten Einführungsprofile vorgesehen, bzw. diese erstrecken sich von dem Einsteckabschnitt 20d radial nach außen. Von den Schiffchen-Profilen 20e sind auf dem Einsteckabschnitt 20d insgesamt acht Stück umfänglich gleichmäßig beabstandet zueinander und durch Führungsnuten 20a getrennt angeordnet, vorliegend einstückig außenseitig angeformt.

Somit ist jeweils zwischen zwei angrenzenden Schiffchen-Profilen 20e eine Führungsnut 20a ausgebildet, die also einen linearen Bereich mit etwa einem Drittel der Länge des vorderseitigen Schiffchen-Profils 20e bildet.

In der Draufsicht weisen die Schiffchen-Profile somit zumindest an einem vorderen Einfädelbereich im Wesentlichen die Geometrie eines gleichschenkeligen Dreiecks auf, wobei sich die Einfädelflächen 20f, 20g von der Vorderkante 20h gleichschenklig zu den beidseitig von dem jeweiligen Schiffchen-Profil ausgebildeten Führungsnuten 20a erstrecken.

Zum Vereinfachen des Einfädelns sind die Schiffchen-Profile entgegen der Einschubrichtung radial nach außen erstreckend nach hinten geneigt, so dass also die Vorderkante 20h nach hinten geneigt ist.

Bei der in den Figuren 1 bis 4 dargestellten ersten Ausführungsform sind die Schiffchen-Profile 20e am hinteren Ende der Spindelmutter 20a ausgebildet, dessen Führungsnuten 20a an der inneren Mantelfläche mit den radial nach innen ragenden Innenstegen 6a an der Innenseite des Führungsrohrs 6 zusammenwirken bzw. in diese eingreifen.

Die beim Fügen der Spindelmutter in das Führungsrohr wirkenden Lageausrichtungsmittel können auch anders ausgebildet sein. So liegt es auch im Rahmen der Erfindung, dass die Lageausrichtungsmittel an der Innenwand des Getriebegehäuses angrenzend an das in das Getriebegehäuse ragende Stirnende des Führungsrohrs ausgebildet sind, so dass also ein von einem Automaten, Roboter oder dergleichen in das Führungsrohr eingeschobene Spindelmutter durch die an dem Gehäuse innenseitig ausgebildeten Einfädelprofile korrekt ausgerichtet wird, also die Innenstege an der Innenseite des Führungsrohrs in die Führungsnuten der Spindelmutter eingreifen.

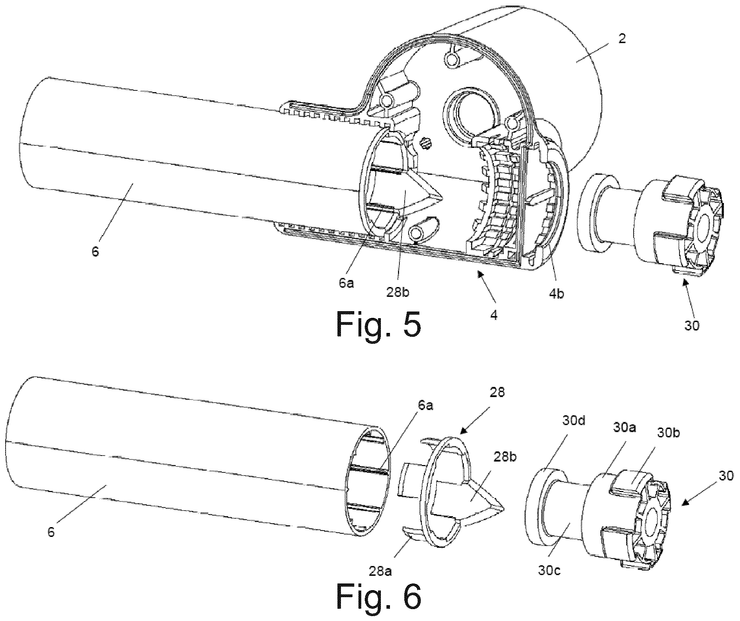

Bei der in den Figuren 5 und 6 dargestellten Ausführungsform ist das Schiffchen-Profil an einem Aufsatzring 28 ausgebildet, der auf das in das Getriebegehäuse 4 ragende, hintere Stirnende des Führungsrohrs 6 aufsetzbar ist. Der Aufsatzring 28 liegt somit in Einbaulage mit einer inneren Fläche an der äußeren Stirnfläche des Führungsrohrs 6 auf. Von der durch diesen Aufsatzring 28 definierten Aufsatzebene, die sich somit quer zur Längsachse des Führungsrohrs 6 erstreckt, sind umfänglich zueinander beabstandet vier Einsteckstege 28a ausgebildet, die sich in einer ersten Richtung quer zu der durch den Aufsatzring 28 definierten Aufsatzebene erstrecken. Diese Einsteckstege 28a greifen, eingesteckt in das Führungsrohr 6, zwischen zwei angrenzende, radial nach innen ragende Innenstege 6a innerhalb des Führungsrohrs 6 ein. In entgegengesetzter Richtung zu den Einsteckstegen 28a erstreckt sich ebenfalls quer zur Aufsatzebene des Aufsatzrings 28 mindestens ein Schiffchenprofil 28b, das beim Einschieben der Spindelmutter 30 zwischen an der äußeren Mantelfläche des hinteren, zylindrischen Einsteckabschnitts 30a ausgebildete, umfänglich unter Bildung von Zwischenräumen zueinander beabstandete Außenstege 30b eingreift. Auch die Spindelmutter 30 umfasst einen hohlzylindrischen Grundkörper 30c, an dessen vorderem Ende ein radial verbreiterter Einsteckbund 30d und an dessen hinterem Ende der zylindrische Einstreckabschnitt 30a mit den radial abstehenden und beabstandet zueinander angeordneten Außenstegen 30b ausgebildet ist, wobei diese vorliegend kreuzweise, diametral gegenüberliegend vorgesehen sind.

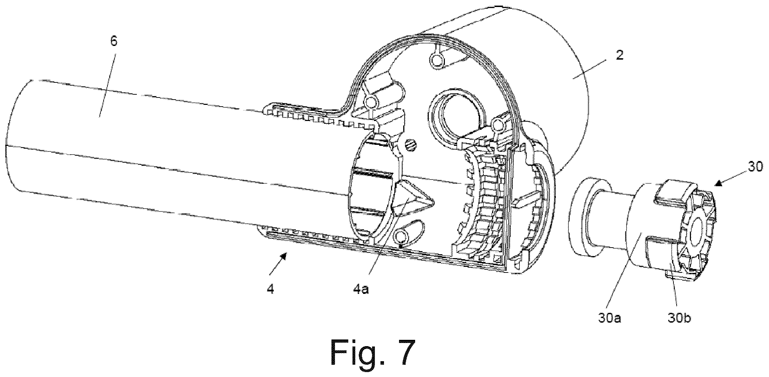

Bei der in Figur 7 dargestellten Ausführungsform ist hingegen das als Ausrichtungshilfe fungierende Schiffchen-Profil 4a an der inneren Mantelfläche des Getriebegehäuses 4 ausgebildet, vorzugsweise einstückig an dieser angeformt. Dieses kann auch mehrere Schiffchenprofile 4a zur Bildung einer Schiffchen-Struktur umfassen, welche beim Zusammenfügen mit der Spindelmutter 30 mit den außenseitig an dem hinteren zylindrischen Einsteckabschnitt 30a radial abragenden Führungsstegen 30b zusammenwirken.

Anzumerken ist, dass die Spindelmutter 30 nicht nur von hinten, sondern auch seitlich in das Getriebegehäuse 4 eingesetzt werden kann, z.B. wenn das Getriebegehäuse 4 am hinteren Ende verschlossen ist und außerhalb von einer Rückwand einen umfänglichen Einsteckrand 4b aufweist, in den der umlaufende Rand an der Außenseite des hinteren Gabelkopfes 10 einsetzbar ist.

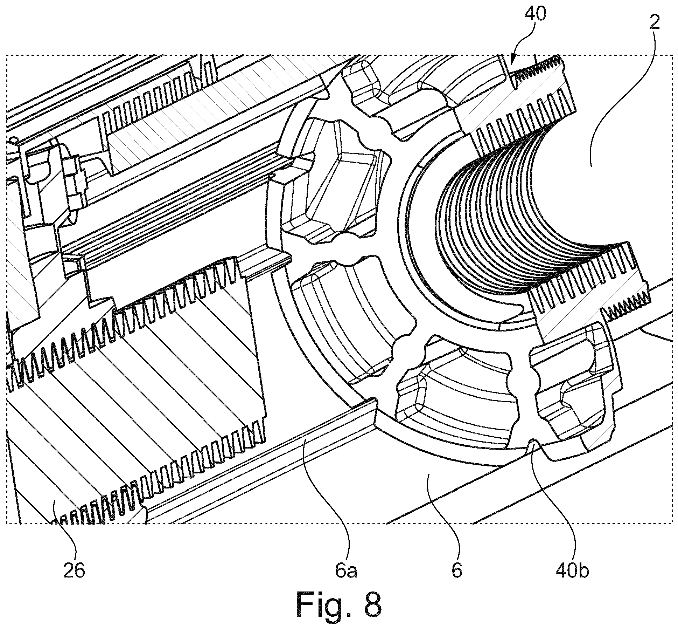

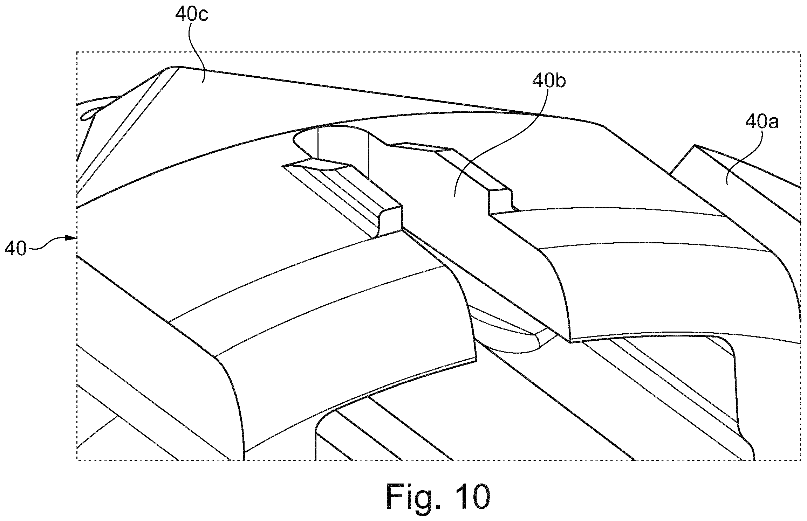

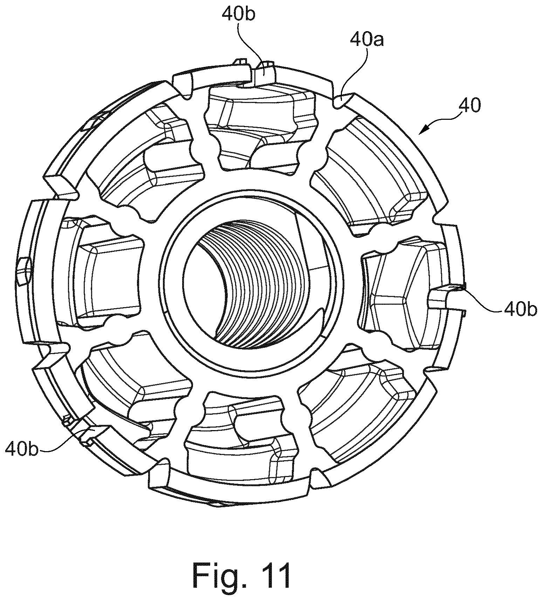

Die Figuren 8-11 zeigen verschiedene Ansichten und Anordnungen einer Spindelmutter 40, die zur Vermeidung von Geräuschen bei der Richtungsumkehr eine federnd ausgebildete Linearführung umfassen, also die Paarung zwischen den Stegen 6a und den Führungsnuten 40a.

Die Figur 8 zeigt dabei einen vergrößerten isometrischen Längsschnitt durch das Lineargetriebe bei aus der Spindelmutter 40 entfernter Spindel 26 zur besseren Verdeutlichung der federnden Flanschführung. Umfänglich beabstandet sind an der inneren Umfangsfläche des Führungsrohrs 6 zu dessen Mittellängsachse hin spitz zulaufende Innenstege 6a ausgebildet, die im Querschnitt ein Dreiecksprofil bilden, welches mit der Spitze in das Innere des Führungsrohrs 6 ragt. Korrespondierend zu diesen Innenstegen 6a sind an der äußeren, zylindrischen Mantelfläche der Spindelmutter 40 beabstandet zu den Abständen der Innenstege 6a Führungsnuten 40a ausgebildet, in welche die Innenstege 6a eingreifen, die also komplementär zur Geometrie der Innenstege entsprechend im Längsschnitt ebenfalls dreieckig ausgebildet sind.

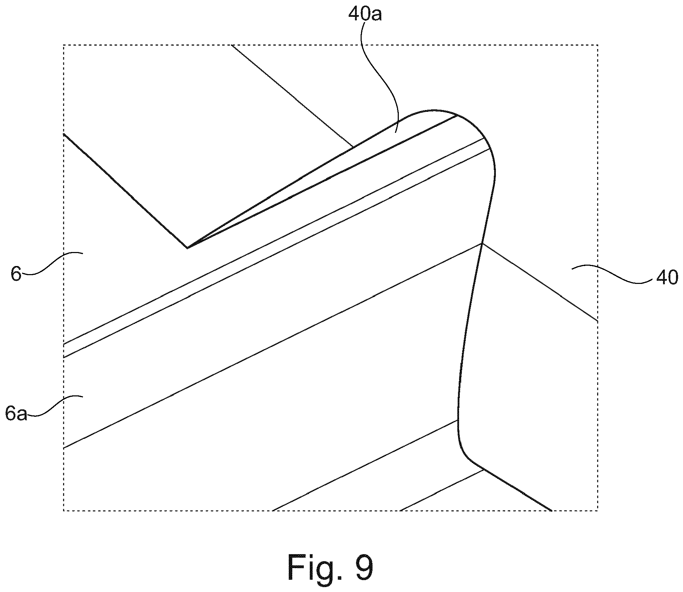

Für eine möglichst geringe Hemmung, also einem möglichst leichten Lauf, ist ein Spiel zwischen den Linearführungen ausgebildet, indem die Führungsnuten 40a etwas breiter ausgebildet sind als die Außengeometrie der Innenstege 6a, was gut an der vergrößerten isometrischen Frontansicht einer Linearführung in Figur 9 ersichtlich ist. Dieses Spiel kann jedoch gerade die ungewünschten Geräusche beim Richtungswechsel des Linearmotors hervorrufen, weil die in der Figur 9 rechtsseitig an der äußeren Fläche des Innenstegs 6a anliegende innere Flanke der Führungsnut 40a beim Richtungswechsel aus dem Eingriff kommt und stattdessen die gegenüberliegende, in der Figur 9 linksseitige Flanke an die gegenüberliegende Außenflanke des Innensteg 6a anschlägt. Zur Vermeidung dieser Anschläge ist die Umfangsfläche des zylindrischen äußeren Mantels bzw. der äußeren Mantelfläche der Spindelmutter mit drei, je um etwa 120° versetzt am Umfangsradius voneinander beabstandeten Federnuten 40b ausgebildet, welche den angrenzenden Führungsnuten 40a eine ausreichende Federeigenschaft verleihen, um das zu vorgeschriebene Anschlagen der seitlichen Flanken der Führungsnuten 40a an die Innenstege 6a beim Richtungswechsel hinreichend zu unterbinden. Vorderseitig ist auch diese Spindelmutter mit Schiffchen-Profilen ausgebildet.

Die durch die Schiffchen-Profile gebildeten Schiffchen-Strukturen vereinfachen somit zusammen mit den Streben bzw. Innenstegen an den Fügepartnern die Montage, indem diese quasi eine selbstjustierende Ausrichtung der Fügepartner beim Fügeprozess ermöglichen. Die Spindelmutter muss somit nur noch in das Führungsrohr eingeführt werden, ohne dass dabei auf die korrekte Winkelausrichtung geachtet werden oder nachjustiert werden müsste.

### Bezugszeichenliste

- 2: Motorgehäuse
- 4: Getriebegehäuse
- 4a: Schiffchen-Profil
- 4b: Einsteckrand
- 6: Führungsrohr
- 6a: Innensteg
- 8: Hubrohr
- 10, 12: Gabelkopf
- 14: Schnecke
- 16: Schneckenrad
- 16a: Lagersitz
- **20**: **Spindelmutter**
- 20a: Führungsnut
- 20b: Grundkörper
- 20c: Einsteckbund
- 20d: Einsteckabschnitt
- 20e: Schiffchen-Profil
- 24: Lager
- 26: Spindel
- 28: Aufsatzring
- 28a: Einstecksteg
- 28b: Schiffchen-Profil
- 30: Spindelmutter
- 30a: Einsteckabschnitt
- 30b: Außensteg
- 30c: Grundkörper
- 30a: Führungsstege
- 30d: Einsteckbund
- 32: Mitnehmerscheibe
- 40: Spindelmutter
- 40a: Führungsnut
- 40b: Federnut
- 40c: Schiffchen-Profil

## Patentansprüche

1. Linearantrieb mit einem Getriebegehäuse (2), einem mit dem Getriebegehäuse (2) verbindbarem oder verbundenen Elektromotor, der eine gelagerte Welle antreibt, wobei die Welle eine Schnecke (14) antreibt, welche ihrerseits ein Schneckenrad (16) kämmt, das seinerseits drehfest mit einer Spindel (26) verbunden ist, auf der eine Spindelmutter (20, 30) läuft, die drehfest und relativ verstellbar in einem Führungsrohr (6) angeordnet ist, wobei das Führungsrohr (6) mit einem Stirnende in dem Getriebegehäuse (2) angeordnet ist, wobei die Spindelmutter (20, 30) mit einem Hubrohr verbunden ist, und wobei zwischen dem Führungsrohr (6) und der Spindelmutter (20, 30) zur Gewährleistung einer korrekten Drehwinkelausrichtung der Spindelmutter (20, 30) im Verhältnis zu dem Führungsrohr (6) Innenstege (6a) am Führungsrohr (6) und komplementäre Führungsnuten (20a) an der Spindelmutter (20, 30) ausgebildet sind,
**DADURCH GEKENNZEICHNET, DASS** zwischen der Spindelmutter (20, 30) und dem Führungsrohr (6) Lageausrichtungsmittelvorgesehen sind, welche mindestens zwei zueinander beabstandete und zumindest am Vorderende im Wesentlichen als Schiffchen-Profile (20e; 28b) ausgebildete Einfädelprofile umfassen, wobei die Schiffchen-Profile (20e; 28b) jeweils eine Vorderkante (20h) aufweisen, von der aus sich seitliche Einfädelflächen (20f, 20g) nach hinten erstrecken, und dass mindestens zwei aneinander angrenzende Einfädelprofile zwischeneinander die Führungsnut (20a) bilden bzw. in die Führungsnut (20a) übergehen.

2. Linearantrieb nach einem der Ansprüche 1, **DADURCH GEKENNZEICHNET, DASS** die Führungsnut einen linearen bzw. geraden Bereich umfasst.

3. Linearantrieb nach Anspruch 1 oder 2, **DADURCH GEKENNZEICHNET, DASS** die Einfädelprofile in der Draufsicht die Geometrie eines gleichschenkligen Dreiecks aufweisen.

4. Linearantrieb nach wenigstens einem der Ansprüche 1 bis 3, **DADURCH GEKENNZEICHNET, DASS** die Einfädelflächen im Wesentlichen gerade ausgebildet sind.

5. Linearantrieb nach einem der Ansprüche 1 bis 4, **DADURCH GEKENNZEICHNET, DASS** sich die Einfädelprofile entgegen der Einschubrichtung nach oben verlaufend erstreckend nach hinten geneigt sind.

6. Linearantrieb nach einem der Ansprüche 1 bis 5, **DADURCH GEKENNZEICHNET, DASS** die Einfädelprofile umfänglich auf einer zylindrischen Mantelfläche der Spindelmutter (20) ausgebildet sind.

7. Linearantrieb nach einem der Ansprüche 1 bis 6, **DADURCH GEKENNZEICHNET, DASS** die Einfädelprofile an der Innenwand des Getriebegehäuses (4), angrenzend an das in das Getriebegehäuse (4) ragende Stirnende des Führungsrohrs (6), ausgebebildet sind.

8. Linearantrieb nach einem der vorhergehenden Ansprüche, **DADURCH GEKENNZEICHNET, DASS** die Einfädelprofile einstückig an dem jeweiligen Fügepartner ausgebildet sind.

9. Linearantrieb nach einem der Ansprüche 1 bis 7, **DADURCH GEKENNZEICHNET, DASS** die Einfädelprofile mit dem jeweiligen Fügepartner verbindbar ausgebildet sind.

10. Linearantrieb nach Anspruch 9, **DADURCH GEKENNZEICHNET, DASS** die Einfädelprofile an einem Aufsatzring (28) ausgebildet sind, der stirnseitig auf das Führungsrohr (6) aufsetzbar ist.

## Claims

1. Linear drive with a gearbox (2), an electric motor, that is connected or that can be connected to the gearbox (2), that drives a mounted shaft, wherein the shaft drives an endless screw (14) that drives on its part a worm wheel (16) that is on its part non-rotatably connected to a spindle (26) on which a spindle nut (20, 30) is integrated that is placed non-rotatably) and relatively displaceable in a guide tube (6), wherein the guide tube (6) is placed with an end face in the gearbox (2), wherein the spindle nut (20, 30) is connected with a lifting tube and wherein inner webs (6a) are configured on the guide tube (6) and complementary guide grooves (20a) on the spindle nut (20, 30) between the guide tube (6) and the spindle nut (20, 30) to ensure a correct orientation of the angle of rotation of the spindle nut (20, 30) with respect to the guide tube (6),
**characterized in that** position orientation means are provided between the spindle nut (20, 30) and the guide tube (6) that comprise at least two insertion profiles spaced from each other and configured at least at the front end substantially as shuttle profiles (20e ; 28b), wherein the shuttle profiles (20e ; 28b) have each a front edge (20h) from which lateral insertion surfaces (20f, 20g) extend rearwardly and that at least two adjacent insertion profiles form the guide groove (20a) between each other or merge into the guide groove (20a).

2. Linear drive according to claim 2, **characterized in that** the guide groove comprises a linear or a straight portion.

3. Linear drive according to claim 1 or 2, **characterized in that** the insertion profiles have in top view the geometry of a isosceles triangle.

4. Linear drive according to one of the claims 1 to 3, **characterized in that** the insertion surfaces are configured substantially straight.

5. Linear drive according to one of the claims 1 to 4, **characterized in that** the insertion profiles are inclined rearwardly and extend upwards against the direction of insertion.

6. Linear drive according to one of the claims 1 to 5, **characterized in that** the insertion profiles are formed on the circumference on a cylindrical lateral surface of the spindle nut (20).

7. Linear drive according to one of the claims 1 to 6, **characterized in that** the insertion profiles are formed on the inner wall of the gearbox (4) adjacent to the end face of the guide tube (6) that protrudes into the gearbox (4).

8. Linear drive according to one of the preceding claims, **characterized in that** the insertion profiles are formed in one piece on the respective assembly part.

9. Linear drive according to one of the claims 1 to 7, **characterized in that** the insertion profiles are formed connectable to the respective assembly part.

10. Linear drive according to claim 9, **characterized in that** the insertion profiles are formed on an attachment ring (28) that can be mounted at the end face onto the guide tube (6).

## Revendications

1. Entraînement linéaire avec un carter d'engrenage (2), un moteur électrique, qui peut être relié ou qui est relié au carter d'engrenage (2), qui entraîne un arbre monté, cependant que l'arbre entraîne une vis sans fin (14) qui est engrenée quant à elle par une roue hélicoïdale (16) qui est, quant à elle, reliée immobile en rotation à une broche (26) sur laquelle se trouve un écrou de broche (20, 30) qui est placé immobile en rotation et relativement déplaçable dans un tube de guidage (6), cependant que le tube de guidage (6) est placé avec une extrémité frontale dans le carter d'engrenage (2), cependant que l'écrou de broche (20, 30) est relié à un tube de levage (6) et cependant qu'entre le tube de guidage (6) et l'écrou de broche (20, 30) des barrettes intérieures (6a) sont configurées sur le tube de guidage (6) et des gorges de guidage complémentaires (20a) sur l'écrou de broche (20, 30) pour garantir une orientation correcte de l'angle de rotation de l'écrou de broche (20, 30) par rapport au tube de guidage (6),
**caractérisé en ce que** des moyens d'orientation de position sont prévus entre l'écrou de broche (20, 30) et le tube de guidage (6) qui comprennent au moins deux profilés d'enfilage espacés l'un de l'autre et configurés au moins à l'extrémité antérieure substantiellement comme des profilés de navette (20e; 28b), cependant que les profilés de navette (20e; 28b) présentent chacun une arête antérieure (20h) à partir de laquelle s'étendent des surfaces d'enfilage latérales (20f, 20g) vers l'arrière et qu'au moins deux profilés d'enfilage adjacents l'un à l'autre forment entre eux la gorge de guidage (20a) ou se transforment en gorge de guidage (20a).

2. Entraînement linéaire selon la revendication 1, **caractérisé en ce que** la gorge de guidage comprend une zone linéaire ou droite.

3. Entraînement linéaire selon la revendication 1 ou 2, **caractérisé en ce que** les profilés d'enfilage présentent, en vue de dessus, la géométrie d'un triangle isocèle.

4. Entraînement linéaire selon au moins l'une des revendications 1 à 3, **caractérisé en ce que** les surfaces d'enfilage sont configurées substantiellement droites.

5. Entraînement linéaire selon au moins l'une des revendications 1 à 4, **caractérisé en ce que** les profilés d'enfilage sont inclinés vers l'arrière en allant vers le haut à l'encontre de la direction d'insertion.

6. Entraînement linéaire selon au moins l'une des revendications 1 à 5, **caractérisé en ce que** les profilés d'enfilage sont configurés sur la circonférence sur une surface d'enveloppe cylindrique de l'écrou de broche (20).

7. Entraînement linéaire selon au moins l'une des revendications 1 à 6, **caractérisé en ce que** les profilés d'enfilage sont configurés sur la paroi intérieure du carter d'engrenage (4) en étant adjacents à l'extrémité frontale du tube de guidage (6) qui fait saillie dans le carter d'engrenage (4).

8. Entraînement linéaire selon l'une des revendications précédentes, **caractérisé en ce que** les profilés d'enfilage sont configurés en une pièce sur la pièce d'assemblage respective.

9. Entraînement linéaire selon au moins l'une des revendications 1 à 7, **caractérisé en ce que** les profilés d'enfilage sont configurés pouvant être reliés au partenaire d'assemblage respectif.

10. Entraînement linéaire selon la revendication 9, **caractérisé en ce que** les profilés d'enfilage sont formés sur un anneau rapporté (28) qui peut être rapporté sur la face sur le tube de guidage (6).
